# EUROPÄISCHE PATENTANMELDUNG

(11) **EP 2 767 437 A1**
(43) Veröffentlichungstag der Anmeldung: **20.08.2014**
(21) Anmeldenummer: 14155203.4
(22) Anmeldetag: 14.02.2014
(51) Int. Cl.: B60P 7/15

(54) **Flexibles Einsteck-Ladesystem**

(30) Priorität: 19.02.2013 DE 202013001547 U
(71) Anmelder: WISTRA GmbH Cargo Control, 23923 Selmsdorf (DE)
(72) Erfinder: Born, Kurt-Rudolf, 23923 Herrnburg (DE)
(74) Vertreter: Patentanwälte Vollmann & Hemmer

(57) **Zusammenfassung**

Das Ladungssicherungssystem ist für Lastfahrzeuge mit Aufbaustruktur vorgesehen, welche Rungen umfasst, in denen in Längsrichtung des Lastfahrzeugs verlaufende und voneinander beabstandete Einstecklatten (3) einsteckbar sind. Zwischen den Einstecklatten (3) ist quer dazu angeordnet ein Sperrbalken (2), der zumindest an einem Endabschnitt (5) mit einem Endstück (6) zur Aufnahme einer Einstecklatte (3) vorgesehen ist, wobei das Endstück (6) zum Einlegen und zum Entnehmen der Einstecklatte (3) nach oben geöffnet werden kann. (Fig. 3)

## Beschreibung

Die Erfindung betrifft ein Ladungssicherungssystem für Lastfahrzeuge gemäß dem Oberbegriff des Anspruchs 1 und einen Sperrbalken für ein Ladungssicherungssystem gemäß dem Oberbegriff des Anspruchs 2.

Zum Transport von Gütern ist es im Straßenverkehr weit verbreitet, Planenfahrzeuge einzusetzen. Dabei sind die Fahrzeugaufbauten der Planenfahrzeuge sehr unterschiedlich konfiguriert. Es gibt beispielsweise Sattelauflieger mit Gardinenvorhang, sogenannte Curtainsider, Motorwagen mit Anhängern oder Bordwandfahrzeuge. Alle bekannten Fahrzeugaufbauten weisen feststehende oder verschiebbare Rungen auf, an denen reihenweise Spriegeltaschen angeordnet sind, welche nach oben und zur Seite hin offen sind, so dass die Spriegelbretter darin eingeführt und aufgenommen werden können. Auch hierbei ist die Ausführung dieser Spriegelbretter sehr unterschiedlich gestaltet. Sie können aus unterschiedlichen Materialien, wie beispielsweise Holz, Aluminium oder Stahl, gefertigt sein. Die Formgebung bei Holz ist rechteckig, bei Aluminium werden ein Hohlprofil mit einer oder mehreren Kammern oder auch sogenannte V-Latten eingesetzt, und bei Stahl werden üblicherweise gekantete Blechstreifen verwendet. Bekannt ist auch die Einbringung von Lochrasterungen zur Aufnahme weiterer Anschlusselemente.

Zur eigentlichen Ladungssicherung kommen im Stand der Technik beispielsweise Zwischenwandverschlüsse und Sperrbalken zum Einsatz.

Ein Zwischenwandverschluss wird hierzu formschlüssig zum Ladegut positioniert und sichert dieses somit gegen ein Verrutschen oder Kippen. Der Zwischenwandverschluss kann einfach und schnell gesetzt und gelöst werden. Über eine Klemmvorrichtung wird eine kraftschlüssige Verbindung mit dem Fahrzeug hergestellt. Diese Verbindung kann sowohl mit der Ladebordwand wie auch mit den Spriegelbrettern erfolgen. Die Klemmung erfolgt über ein Federspannsystem, welches mit Hilfe eines Hebels per Hand bedienbar ist. Der Klemmbereich der Stahlendstücke ist einstellbar und liegt üblicherweise zwischen 21 und 33 mm. Das Aluminiumprofil zwischen den Endstücken ist steck- und teleskopierbar. Der Einsatzbereich von Zwischenwandverschlüssen liegt in einem Bereich von 2400 mm bis 2700 mm und sie können eine Blockierkraft von 400 daN bereitstellen.

Sperrbalken werden ebenfalls formschlüssig zum Ladegut positioniert. Die Sicherung der Ladung erfolgt, indem die Endzapfen formschlüssig in einer Lochrasterung verankert werden. Diese Lochrasterung kann sowohl im Dach-/Ladeflächenbereich als auch in den Seitenwänden oder Spriegelbrettern vorhanden sein. Der Sperrbalken ist üblicherweise auch teleskopierbar und verfügt über eine Spannvorrichtung, wobei ebenfalls Sicherungskräfte von 400 daN erzielt werden.

Um jedoch eine höhere Sicherungskraft zu erreichen, sind im Stand der Technik Ladungssicherungssysteme mit miteinander kombinierbaren Ladungssicherungshilfsmitteln und Zurrmitteln bekannt.

Ein bekanntes Ladungssicherungssystem für Curtainsider weist zumindest zwei Einstecklatten, einen Sperrbalken und zwei Diagonal-Zurrgurte auf. Die Einstecklatte ist in der Länge anpassbar und verfügt über eine Rasterlochung, in der ein Standard-Spitzhaken arretiert oder der Sperrbalken mit seinem Hakenende eingerastet werden kann. Dadurch entstehen eine Vielfalt im Anwendungsbereich und eine gute Kompatibilität des Systems mit anderen Elementen. Der Sperrbalken wird in zwei Ausführungen bereitgestellt. Abhängig vom Laderaum und von der Belastung kann zwischen einem breiten und einem schmalen Sperrbalken ausgewählt werden. Beide besitzen an den jeweiligen Enden Haken, mit denen sie fest an den Spriegelbrettern arretierbar sind. Die wirkenden Kräfte können somit über die Spriegelbretter an den Aufbau des Transportmittels übertragen werden. An der Unterseite der breiten Ausführung befinden sich zwei Einhakösen. Diese erlauben eine sichere Verbindung mit den Zurrgurten und ermöglichen so auch die Diagonalabspannung. Die schmale Ausführung besteht aus dem Einstecklattenprofil und kann die Verbindung mit den Zurrgurten über die Rasterlochung eingehen. Mittels dieses Ladungssicherungssystems ist es möglich, Ladungen in allen Richtungen zu blockieren, jedoch ist eine seitliche Be- und Entladung mit nur einseitigem Aufplanen nicht möglich.

Ein weiteres aus dem Stand der Technik bekanntes Ladungssicherungssystem besteht aus Einstecklatten und Sperrlatten und kann zudem mit runden Sperrstangen, Vierkantsperrbalken, Zurrgurten und Kleidertransportstangen erweitert werden. Die Einstecklatten verfügen über eine Kombistanzung, welche die Verbindung mit unterschiedlichen Ladungssicherungshilfsmitteln wie Rundstangen, Vierkantsperrbalken, etc. ermöglicht. Die Sperrlatten verfügen an den Enden über zwei universale Endstücke mit Teleskopfunktion, welche in den Schlitz der Einstecklatte formschlüssig einrasten. Die Ladung kann dadurch formschlüssig gesichert und in die wirkenden Kräfte in den Aufbau des Transportmittels eingeleitet werden. Auch dieses System ist in der Lage, Ladungen in allen Richtungen zu blockieren, ermöglicht aber, wie auch die zuvor beschriebenen Lösungen, keine seitliche Be- und Entladung mit nur einseitigem Aufplanen, wodurch ein hoher zeitlicher und damit verbundener finanzieller Aufwand entsteht.

Vor diesem Hintergrund liegt der Erfindung die Aufgabe zugrunde, eine Lösung zur Ladungssicherung auf Planenfahrzeugen bereitzustellen, welche hohe Sicherungskräfte gewährleistet und gleichzeitig ein seitliches Be- und Entladen mit nur einseitigem Aufplanen ermöglicht.

Diese Aufgabe wird gemäß der Erfindung wird durch ein Ladungssicherungssystem mit den in Anspruch 1 angegebenen Merkmalen sowie durch einen Sperrbalken mit den in Anspruch 2 angegebenen Merkmalen gelöst. Vorteilhafte Ausgestaltungen der Erfindung sind in den Unteransprüchen, der nachfolgenden Beschreibung und der Zeichnung angegeben.

Erfindungsgemäß wird ein Ladungssicherungssystem für Lastfahrzeuge mit Aufbaustruktur, welche Rungen umfasst, bereitgestellt, wobei das Ladungssicherungssystem zumindest zwei in Längsrichtung des Lastfahrzeugs verlaufende und voneinander beabstandete Einstecklatten, welche in jeweiligen Rungen der Aufbaustruktur fixierbar sind, und zumindest einen zwischen den Einstecklatten quer angeordneten Sperrbalken zur formschlüssigen Sicherung von Ladung umfasst, wobei der zumindest eine Sperrbalken zumindest an einem Endabschnitt mit einem Endstück zur Aufnahme einer der zumindest zwei Einstecklatten versehen ist, wobei das Endstück zum Einlegen und zum Entnehmen der Einstecklatte nach oben und/oder nach unten geöffnet werden kann. Durch das erfindungsgemäße Ladungssicherungssystem kann ein Lastfahrzeug, wie beispielsweise ein Curtainsider, be- und entladen werden, ohne dabei den gesamten Curtainsider aufzuplanen. Weiterhin kann eine positionsunabhängige Be- und Entladung des Lastfahrzeugs bei aufeinander folgenden Ladeeinheiten erfolgen. Aufgrund des nach oben zu öffnenden Endstücks kann eine Einstecklatte aus dem quer angeordneten Sperrbalken entnommen werden, woraufhin der Sperrbalken in einem einseitig "schwebenden" Zustand ist, so dass eine seitliche Zugänglichkeit der Ladung gewährleistet ist. Diese kann somit entnommen werden und der entstandene Freiraum neu beladen werden. Hierdurch können bei der Be- und Entladung Zeit und somit auch Kosten eingespart werden, was den Be- und Entladevorgang deutlich effizienter macht.

Weiterhin wird gemäß der Erfindung ein Sperrbalken, insbesondere für ein Ladungssicherungssystem für Lastfahrzeuge mit Aufbaustruktur, bereitgestellt, wobei der Sperrbalken zumindest an einem Endabschnitt mit einem Endstück versehen ist, in welchem eine Einstecklatte des Ladungssicherungssystems aufnehmbar ist, wobei das Endstück zum Einlegen und zum Entnehmen der Einstecklatte nach oben und/oder nach unten geöffnet werden kann. Durch die Möglichkeit, das Endstück nach oben oder nach unten zu öffnen, so dass der Sperrbalken in einem einseitig "schwebenden" Zustand gehalten wird, werden die gleichen Vorteile, wie oben bereits beschrieben, erzielt. Weiterhin, da die Verbindung der Endstücke mit dem Sperrbalken in einem Drehwinkel von 180° erfolgen kann, kann die Öffnung der Endstücke entweder nach oben, nach unten oder nach oben und unten zeigen. Dadurch ist eine Vielfalt der Anwendung und Handhabung gegeben.

Gemäß einer bevorzugten Ausführungsform weist das Endstück einen zweistufigen Öffnungs- und Schließmechanismus auf.

Gemäß einer weiteren bevorzugten Ausführungsform weist der Öffnungs- und Schließmechanismus ein Gehäuse mit Befestigungseinrichtungen, insbesondere mit Langlöchern, zur Befestigung des Gehäuses an dem Sperrbalken auf.

Vorzugsweise ist das Gehäuse mit einer Aufnahme versehen, in welcher die Einstecklatte aufnehmbar ist.

Weiterhin weist gemäß einer bevorzugten Ausführungsform der Öffnungs- und Schließmechanismus zwei Zapfen auf, welche in das Gehäuse ein- und ausfahrbar sind. In ausgefahrenem Zustand liegen die zwei Zapfen an einer in die Aufnahme eingelegten Einstecklatte, insbesondere in zwei entsprechenden Rillen der Einstecklatte, an, um diese in der Aufnahme zu sichern. In eingefahrenem Zustand, in welchem die zwei Zapfen in das Gehäuse eingefahren sind, wird die Einstecklatte wieder freigegeben.

Darüber hinaus ist es vorteilhaft, wenn der Öffnungs- und Schließmechanismus einen in das Gehäuse ein- und ausfahrbaren Auflageriegel umfasst, welcher die Aufnahme zumindest teilweise verschließt und freigibt. Der Auflageriegel sorgt dafür, dass der Sperrbalken auf der Einstecklatte liegen bleibt und ohne große Mühe verschoben werden kann. Der Auflageriegel hält die in der Aufnahme aufgenommene Einstecklatte in der Aufnahme bzw. gibt diese frei, so dass die Einstecklatte entnehmbar ist und ein seitliches Be- oder Entladen mit nur einseitigem Aufplanen erfolgen kann.

Von Vorteil ist auch, wenn der Öffnungs- und Schließmechanismus einen Spannhebel umfasst, welcher in Folge einer ersten Betätigung bewirkt, dass die zwei Zapfen in das Gehäuse eingefahren werden.

Vorzugsweise bewirkt der Spannhebel in Folge einer zweiten Betätigung, dass der Auflageriegel in das Gehäuse eingefahren wird.

Gemäß noch einer weiteren bevorzugten Ausführungsform ist in dem Gehäuse ein Federspannsystem angeordnet, welches über Druckfedern mit einem Schlitten zusammenwirkt, um den zweistufigen Öffnungs- und Schließmechanismus zu betätigen.

Der Sperrbalken kann weiterhin als Rechteckprofil ausgebildet sein.

Die Erfindung ist nachfolgend anhand eines in der Zeichnung dargestellten Ausführungsbeispiels näher erläutert. Es zeigen
- Fig. 1: eine perspektivische Darstellung eines Ladungssicherungssystems gemäß einer Ausführungsform der Erfindung;
- Fig. 2: eine Vorderansicht eines Sperrbalkens des in Fig. 1 dargestellten Ladungssicherungssystems;
- Fig. 3: eine Detailansicht eines Endabschnitts des in Fig. 2 dargestellten Sperrbalkens mit damit verbundener Einstecklatte;
- Fig. 4: eine Detailansicht eines Endabschnitts des in Fig. 2 dargestellten Sperrbalkens ohne Einstecklatte;
- Fig. 5A, 5B: jeweilige Ansichten eines Endstücks des in Fig. 2 dargestellten Sperrbalkens, wobei das Endstück in geschlossenem Zustand ist;
- Fig. 6A, 6B: jeweilige Ansichten des in Fig. 5A und Fig. 5B dargestellten Endstücks in halb geöffnetem Zustand;
- Fig. 7A, 7B: jeweilige Ansichten des in Fig. 5A und Fig. 5B dargestellten Endstücks in vollständig geöffnetem Zustand; und
- Fig. 8: das in Fig. 1 dargestellte Ladungssicherungssystem mit einseitig schwebendem Sperrbalken.

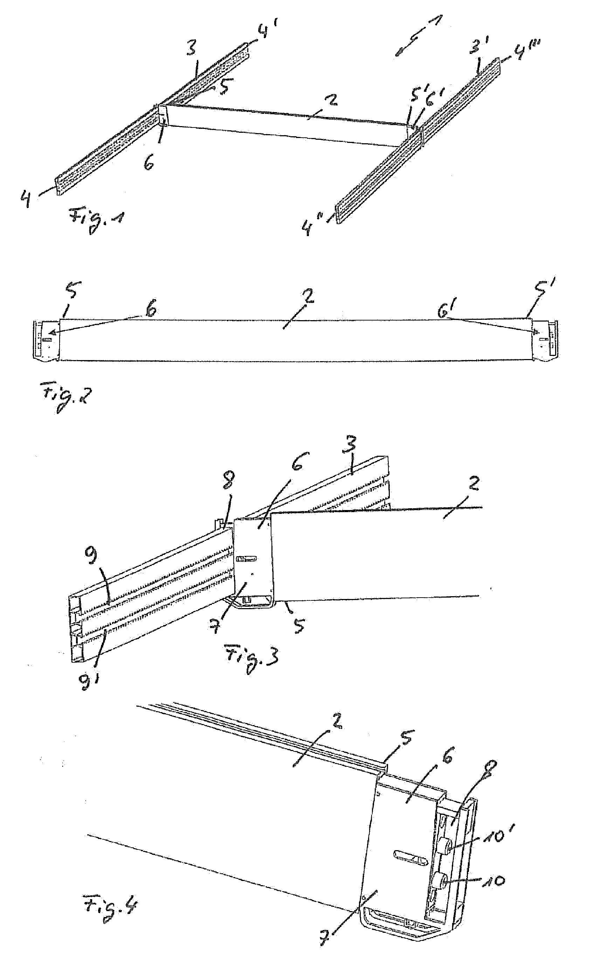

Fig. 1 ist eine perspektivische Darstellung eines Ladungssicherungssystems 1 für Lastfahrzeuge mit Aufbaustruktur gemäß einer Ausführungsform der Erfindung. Das Ladungssicherungssystem 1 umfasst einen Sperrbalken 2, welcher sich quer zwischen zwei parallel angeordneten und voneinander beabstandeten Einstecklatten 3, 3' erstreckt, und welcher zur formschlüssigen Sicherung von Ladung dient. Der Sperrbalken 2 ist als Rechteckprofil ausgebildet. Die Einstecklatten 3, 3' können aus Spriegeln der hier nicht dargestellten Aufbaustruktur eines Planenfahrzeugs bestehen und sind an ihren jeweiligen Enden 4, 4', 4". 4'" beispielsweise an Rungen des Aufbaus fixierbar. Der Sperrbalken 2 weist in der hier dargestellten Ausführungsform an seinen beiden gegenüberliegenden Endabschnitten 5, 5' jeweils ein Endstück 6, 6' zur Aufnahme jeweils einer der Einstecklatten 3, 3' auf. Die Endstücke 6, 6' können zum Einlegen und zum Entnehmen der Einstecklatten 3, 3' nach oben geöffnet werden.

Fig. 2 ist eine Vorderansicht eines Sperrbalkens 2 des in Fig. 1 dargestellten Ladungssicherungssystems 1 für Lastfahrzeuge mit Aufbaustruktur. Wie hier erkennbar ist, weist der Sperrbalken 2 an den beiden Endabschnitten 5, 5' die Endstücke 6, 6' auf, in welchen die hier nicht dargestellten Einstecklatten 3, 3' aufnehmbar sind.

Fig. 3 ist eine Detailansicht eines Endabschnitts 5 des in Fig. 2 dargestellten Sperrbalkens 2 mit damit verbundener Einstecklatte 3. Das Endstück 6, welches an dem Endabschnitt 5 des Sperrbalkens 2 angeordnet ist, weist ein Gehäuse 7 mit einer Aufnahme 8 auf, wobei die Einstecklatte 3 in der Aufnahme 8 des Gehäuses 7 aufgenommen und fixiert ist. Die Einstecklatte 3 ist als Doppelairlineschiene ausgebildet und weist weiterhin zwei parallel zueinander verlaufende Längsrillen 9, 9' auf, in welche zwei aus dem Gehäuse 7 ausfahrbare Zapfen, welche in Zusammenhang mit Figur 4 noch näher beschrieben werden, eingreifen.

Fig. 4 ist eine Detailansicht eines Endabschnitts 5 des in Fig. 2 dargestellten Sperrbalkens 2 ohne in der Aufnahme 8 des Gehäuses 7 des Endstücks 6 angeordneter Einstecklatte. Das Endstück 6 bzw. dessen Gehäuse 7 ist in einem vollständig geschlossenem Zustand dargestellt, was bedeutet, dass die zwei bereits oben erwähnten Zapfen 10, 10' vollständig aus dem Gehäuse 7 ausgefahren sind und in die Aufnahme 8 hineinragen, ein Auflageriegel 11 ebenfalls vollständig aus dem Gehäuse 7 ausgefahren ist und die Aufnahme 8 an der oberen Seite verschließt. Der in das Gehäuse 7 ein- und ausfahrbare Auflageriegel 11 und die ebenfalls in das Gehäuse 7 ein- und ausfahrbaren Zapfen 10, 10' sind Teil eines Öffnungs- und Schließmechanismus des Endstücks 6.

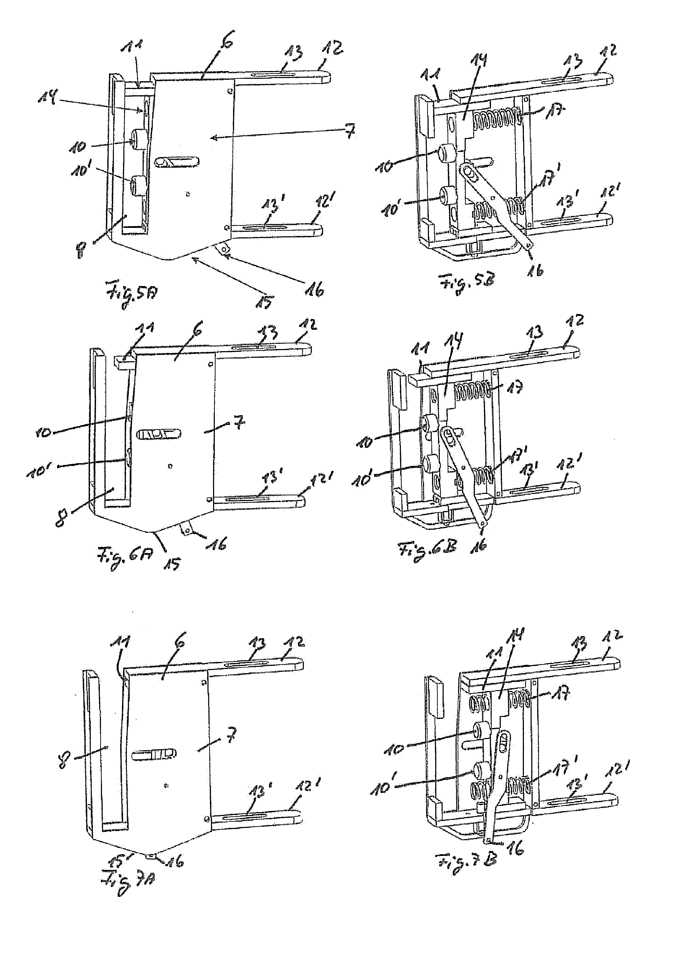

Fig. 5A und Fig. 5B sind jeweilige Ansichten eines Endstücks 6 des in Fig. 2 dargestellten Sperrbalkens, wobei das Endstück 6 in geschlossenem bzw. verriegelndem Zustand ist. Figur 5A ist eine Ansicht des Endstücks 6 mit Gehäuse 7 und Figur 5B ist eine Ansicht des Endstücks 6 ohne das Gehäuse 7. Wie in Figur 5A erkennbar ist, sind an dem Gehäuse 7 Arme 12, 12' mit jeweiligen Langlöchern 13, 13' vorgesehen, welche zur Aufnahme des hier nicht dargestellten Sperrbalkens dienen. Weiterhin weist das Endstück 6 einen in der Aufnahme 8 vorgesehenen Schlitten 14, einen Arretierbolzen 15 und einen Spannhebel 16 auf. Die Betätigung des Spannhebels 16 bewirkt ein Einfahren des Schlittens 14 in das Gehäuse 7, wie unten in Zusammenhang mit den Figuren 6A, 6B und 7A, 7B beschrieben werden wird. Wie in Fig. 5B erkennbar ist, ist in dem Gehäuse des Endstücks 6 ein Federspannsystem angeordnet, welches über Druckfedern 17, 17' mit dem Schlitten 14 zusammenwirkt, um den Öffnungs- und Schließmechanismus, welcher zweistufig ist, zu betätigen. Das Öffnen des Endstücks 6, welches unten in Zusammenhang mit Figuren 6A, 6B, 7A und 7B beschrieben wird, bewirkt eine Spannung der Druckfedern 17, 17', welche direkt mit dem Schlitten 14 verbunden sind. Der Arretierbolzen 15 hält den Schlitten 14 in zwei definierten Positionen. Bei Betätigung des Arretierbolzens 15, beispielsweise durch Ziehen, schnellt der Schlitten 14 mittels der Federdruckkraft aus dem Gehäuse 7 und schließt das Endstück 6. Die Zapfen 10, 10' fahren in die Doppelairlineschiene der Einstecklatte 3 und sorgen somit für eine formschlüssige Verbindung.

Fig. 6A und Fig. 6B sind jeweilige Ansichten des in Fig. 5A und Fig. 5B dargestellten Endstücks 6 in halb geöffnetem Zustand. Wiederum ist Fig. 6A eine Ansicht des Endstücks 6 mit Gehäuse 7 und Figur 6A ist eine Ansicht des Endstücks 6 ohne das Gehäuse 7. In dem hier dargestellten halb geöffnetem Zustand wird der Spannhebel 16 mittels einer ersten Betätigung in eine erste Rastposition gebracht, wodurch bewirkt wird, dass der Schlitten 14 mit den zwei Zapfen 10, 10' in das Gehäuse 7 vollständig eingefahren wird. Gleichzeitig wird der Auflageriegel 11, welcher dazu dient, dass der hier nicht dargestellte Sperrbalken auf der ebenfalls nicht dargestellten Einstecklatte liegen bleibt, halb in das Gehäuse 7 eingefahren.

Fig. 7A und Fig. 7B sind jeweilige Ansichten des in Fig. 5A und Fig. 5B dargestellten Endstücks 6 in vollständig geöffnetem Zustand, wobei wiederum Fig. 7A eine Ansicht des Endstücks 6 mit Gehäuse 7 und Fig. 7B eine Ansicht des Endstücks 6 ohne das Gehäuse 7 ist. Durch eine zweite Betätigung des Spannhebels 16 in eine zweite Rast- oder Endposition wird nun der Auflageriegel 11 vollständig in das Gehäuse 7 eingefahren, so dass die Aufnahme 8 nach oben geöffnet ist und eine Einstecklatte in die Aufnahme 8 eingeführt werden kann oder daraus entnommen werden kann.

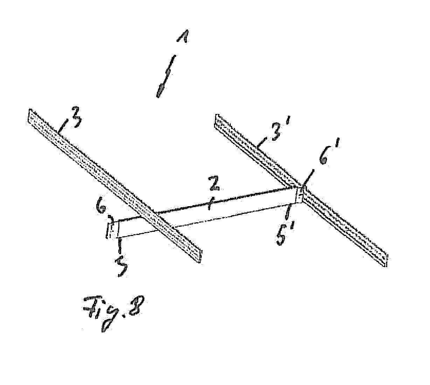

Fig. 8 zeigt das in Fig. 1 dargestellte Ladungssicherungssystem 1 mit einseitig schwebendem Sperrbalken 2. Nach dem oben beschriebenen Öffnungsprozess des Endstücks 6 kann die Einstecklatte 3 aus der Aufnahme 8 entnommen werden. Der Sperrbalken 2 wird dann lediglich an seinem gegenüberliegenden Endabschnitt 5' an der Einstecklatte 3' gehalten und ist somit in einem einseitig "schwebenden" Zustand. In diesem Zustand ist die Ladefläche somit frei zugänglich und kann seitlich be- und entladen werden.

### Bezugszeichenliste

- 1: - Ladungssicherungssystem
- 2: - Sperrbalken
- 3, 3': - Einstecklatten
- 4, 4', 4", 4'": - Enden der Einstecklatten
- 5, 5': - Endabschnitte des Sperrbalkens
- 6, 6': - Endstücke
- 7: - Gehäuse
- 8: - Aufnahme
- 9, 9': - Längsrillen
- 10, 10': - Zapfen
- 11: - Auflageriegel
- 12, 12': - Arme
- 13, 13': - Langlöcher
- 14: - Schlitten
- 15: - Arretierbolzen
- 16: - Spannhebel
- 17, 17': - Druckfedern

## Patentansprüche

1. Ladungssicherungssystem (1) für Lastfahrzeuge mit Aufbaustruktur, welche Rungen umfasst, wobei das Ladungssicherungssystem (1) zumindest zwei in Längsrichtung des Lastfahrzeugs verlaufende und voneinander beabstandete Einstecklatten (3, 3'), welche in jeweiligen Rungen der Aufbaustruktur fixierbar sind, und zumindest einen zwischen den Einstecklatten (3, 3') quer angeordneten Sperrbalken (2) zur formschlüssigen Sicherung von Ladung umfasst,
**dadurch gekennzeichnet, dass**
der zumindest eine Sperrbalken (2) zumindest an einem Endabschnitt (5, 5') mit einem Endstück (6, 6') zur Aufnahme einer der zumindest zwei Einstecklatten (3, 3') versehen ist, wobei das Endstück (6, 6') zum Einlegen und zum Entnehmen der Einstecklatte (3, 3') nach oben und/oder nach unten geöffnet werden kann.

2. Sperrbalken (2), insbesondere für ein Ladungssicherungssystem (1) für Lastfahrzeuge mit Aufbaustruktur,
**dadurch gekennzeichnet, dass**
der Sperrbalken (2) zumindest an einem Endabschnitt (5, 5') mit einem Endstück (6, 6') versehen ist, in welchem eine Einstecklatte (3, 3') des Ladungssicherungssystems (1) aufnehmbar ist, wobei das Endstück (6, 6') zum Einlegen und zum Entnehmen der Einstecklatte (3, 3') nach oben und/oder nach unten geöffnet werden kann.

3. Sperrbalken (2) gemäß Anspruch 2, **dadurch gekennzeichnet, dass** das Endstück (6, 6') einen zweistufigen Öffnungs- und Schließmechanismus aufweist.

4. Sperrbalken (2) gemäß Anspruch 3, **dadurch gekennzeichnet, dass** der Öffnungs- und Schließmechanismus ein Gehäuse (7) mit Befestigungseinrichtungen, insbesondere mit Langlöchern (13, 13'), zur Befestigung des Gehäuses (7) an dem Sperrbalken (2) aufweist.

5. Sperrbalken (2) gemäß Anspruch 4, **dadurch gekennzeichnet, dass** das Gehäuse (7) mit einer Aufnahme (8) versehen ist, in welcher die Einstecklatte (3, 3') aufnehmbar ist.

6. Sperrbalken (2) gemäß Anspruch 4 oder 5, **dadurch gekennzeichnet, dass** der Öffnungs- und Schließmechanismus zwei Zapfen (10, 10') aufweist, welche in das Gehäuse (7) ein- und ausfahrbar sind.

7. Sperrbalken (2) gemäß einem der Ansprüche 4 bis 6, **dadurch gekennzeichnet, dass** der Öffnungs- und Schließmechanismus einen in das Gehäuse (7) ein- und ausfahrbaren Auflageriegel (11) umfasst, welcher die Aufnahme (8) zumindest teilweise verschließt und freigibt.

8. Sperrbalken (2) gemäß einem der Ansprüche 3 bis 7, **dadurch gekennzeichnet, dass** der Öffnungs- und Schließmechanismus einen Spannhebel (16) umfasst, welcher in Folge einer ersten Betätigung bewirkt, dass die Zapfen (10, 10') in das Gehäuse (7) eingefahren werden.

9. Sperrbalken (2) gemäß Anspruch 8, **dadurch gekennzeichnet, dass** der Spannhebel (16) in Folge einer zweiten Betätigung bewirkt, dass der Auflageriegel (11) in das Gehäuse (7) eingefahren wird.

10. Sperrbalken (2) gemäß Anspruch 4 bis 9, **dadurch gekennzeichnet, dass** in dem Gehäuse (2) ein Federspannsystem angeordnet ist, welches über Druckfedern (17, 17') mit einem Schlitten (14) zusammenwirkt, um den zweistufigen Öffnungs- und Schließmechanismus zu betätigen.

11. Sperrbalken (2) gemäß einem der Ansprüche 2 bis 10, **dadurch gekennzeichnet, dass** der Sperrbalken (2) als Rechteckprofil ausgebildet ist.
